(19) Europäisches Patentamt

European Patent Office

Office européen des brevets

(11) **EP 0 859 950 B1**

(12) **EUROPEAN PATENT SPECIFICATION**

(45) Date of publication and mention
of the grant of the patent:
**30.08.2000 Bulletin 2000/35**

(51) Int Cl.⁷: **G01N 3/30**, G01M 7/08, G01L 5/16

(21) Application number: **96938059.1**

(22) Date of filing: **30.10.1996**

(86) International application number:
**PCT/EP96/04783**

(87) International publication number:
**WO 97/17602 (15.05.1997 Gazette 1997/21)**

(54) **IMPROVEMENTS IN OR RELATING TO CONSTRUCTION TEST APPARATUS**

VERBESSERTE VORRICHTUNG ZUR PRÜFUNG VON BAUTEILEN

AMELIORATIONS SE RAPPORTANT A UN DISPOSITIF D'ESSAI D'UNE CONSTRUCTION

(84) Designated Contracting States:
**AT BE CH DE DK ES FI FR GB GR IE IT LI LU MC NL PT SE**

(30) Priority: **06.11.1995 EP 95307926**

(43) Date of publication of application:
**26.08.1998 Bulletin 1998/35**

(73) Proprietor: **EUROPEAN COMMUNITY
2920 Luxembourg (LU)**

(72) Inventors:
• **ALBERTINI, Carlo
I-21027 Ispra (IT)**
• **MOGILEVSKI, Mikhail
Novosibirsk, 630090 (RU)**

(74) Representative: **Parker, Nigel Edward et al
H.N. & W.S. Skerrett
Charles House
148/9 Great Charles Street
Birmingham B3 3HT (GB)**

(56) References cited:
FR-A- 2 696 002          US-A- 3 831 441
US-A- 4 161 874          US-A- 5 325 701
US-A- 5 487 298

• DATABASE WPI Section EI, Week 9402 Derwent Publications Ltd., London, GB; Class S02, AN 94-014838 XP002000768 & SU 1 783 329 A (MOSC RAIL ENG INST) , 23 December 1992

EP 0 859 950 B1

**Description**

This invention relates to improvements in or relating to construction or structure test apparatus and is more particularly, but not exclusively, concerned with "Hopkinson" bar systems used in crash-worthiness investigations of vehicles and road barriers.

Nowadays, about 50,000 people are killed per year in road accidents in Europe and thus improving energy absorbing systems in vehicles to dissipate impact energy incurred during a crash of the vehicle, for example with an obstacle, is very important. It is well known for automotive companies to carry out investigations on their vehicles with the aim of improving the safety characteristics of said vehicles. Due to the complexity of impact phenomena such investigations are generally carried out, by way of experiments on vehicles under crash conditions, on a real scale rather than investigating effects on scaled-down models. Consequently, such experiments tend to be expensive and are usually restricted by measuring the peak deceleration of a driver's mannequin and by analysis of the distribution of residual deformation. Experimental data received from existing load cells used as part of the testing apparatus tends to be severely complicated by wave effects incurred during an impact and such data is usually presented after some hardly substantiated filtering (particularly questionable in such measurements is the very essential value of a peak force).

However, wave propagation effects can instead of causing undesirable complications be utilised as a precise instrument for analysis of mechanical characteristics in dynamic loading when an appropriately equipped Hopkinson bar system is used. A Hopkinson bar is a popular apparatus used in the study of the dynamic response of materials. In essence, the Hopkinson bar is an elastic bar into which a known pressure-time loading applied at one end is propagated and, by suitable measurement techniques, details of the applied disturbance can be reconstructed. Usually, this will involve measuring signals from strain gauges at the input bar (which introduces a load to a sample being tested) and signals from an output, supporting bar to compute a force/displacement dependence in the sample (see in particular Lindholm U.S. 1971, High Strain Rate Tests, Techniques of Metal Research, Volume 5, part 1, J. Wiley). Measurable loading parameters (stress level, controlled value of deformation, velocity of deformation) are determinable respectively by the velocity of loading surface, the length of the bars and the permitted (elastic) stress in the bars. Hopkinson bar modifications are available for analysis of tension, compression, shear or torsional forces and so on. However, generally, Hopkinson bar systems are used for the study of mechanical properties of materials and experiments are conducted on rather small samples, for example several centimetres in length.

Nevertheless, experiments have been performed using a large dynamic test facility (LDTF) including a large Hopkinson bar installation used for investigating the dynamic behaviour of large specimens of heavy section reinforced concrete beams of about two to three metres in length. A paper entitled "Recent Development Results of LDTF Tests on Steel and Concrete Specimens" by C. Delzano, E. Gutierrez, P.M. Jones and G. Verzeletti presented in Nuclear Engineering and Design, 112 (1989), page 65 discusses a large (e.g. 200 metres) testing facility for the investigation of characteristics of concrete blocks but in quasi-static approach, without considering wave effects. This paper shows a 3-point bending Hopkinson bar system in which the force is measured at the input bar and displacements are measured by means of an optical system. However, very short output bars do not tend to permit accurate measurements to be produced according to Hopkinson bar theory. Therefore, analysis in said paper was made in quasi-static conditions. Even using two long output bars in a 3-point bending scenario, standard Hopkinson bar measurements could only yield reliable information about forces in the case of precise symmetrical deformation (i.e. only at the initial stage of loading) because an intense plastic deformation (see FIGURE 26 of the paper) will produce non-equal forces in perpendicular directions; non-controlled in a standard Hopkinson bar method.

French Patent Specification No. 2696002 shows a demonstration instrument for teaching purposes and is only concerned with measurements in a static system of 3d efforts or forces. The arrangement shown in 2696002 could not be used to measure impulsive forces because of stress wave reflections and inertia forces which tend to cause high levels of inaccuracy.

Furthermore the arrangement shown in 2696002 cannot be used on mechanical structures because its use requires modification of the structure being tested which changes the distribution of the efforts or forces in the structure itself. What is needed is an arrangement which leaves the original geometry of the structure being tested.

It is an object of the present invention to at least alleviate one of the aforementioned, or other, problems associated with testing of materials or mechanical structures or to provide a Hopkinson or pressure bar system for carrying out such testing which is improved in at least some respect.

According to the present invention there is provided a Hopkinson bar system or pressure bar system comprising a plurality of output bars arranged, in use, (preferably at an angle to one another) to measure components of an impulsive force in a sample or structure being tested.

Further according to the present invention there is provided a Hopkinson bar system or pressure bar system comprising at least two output bars operatively connected at an angle to one another (usually at right angles) by means of a node, said node, in use, being operatively connected to a sample or structure being tested.

In use, the sample may comprise a bar of about 2 or 3 metres long and may be attached e.g. by welding or by a force fit to one face of the node (usually of generally square section). The cross section of the node may be larger than that of the sample bar.

One of the output bars (usually at right angles to the sample bar) may comprise a collar embracing the node and there may be gaps defined between the node and the collar on opposed sides thereof permitting a small displacement of the node in a plane perpendicular to the other output bar (which bar may be axially aligned with the sample bar and attached to an opposing face of the node).

Preferably, low friction contact surfaces are provided on contacting surfaces of the output bar/s and node and more particularly on the collar (where provided) and node.

Usually, the system will include strain gauges positioned on the output bars to measure wave effects.

The system may include three output bars and the sample or structure may be of a complex three dimensional form under dynamic loading rather than just a simple bar.

In one embodiment of the present invention, the sample is a linear structure and may be in a three-point bending arrangement possibly under a non-central normal impact loading. A node may be provided at each end of the linear structure with each node connected to two mutually perpendicular output bars, two of said output bars being parallel with the linear structure and said other two output bars being parallel to one another.

In a second embodiment of the present invention, the sample is a real part of a vehicle (e.g. vehicle bumper with supporting constructions) undergoing an oblique collision with a wall (Hopkinson pressure output bar) more particularly under high velocity impact (e.g. 20 to 40 ms$^{-1}$).

A further embodiment includes a road barrier as the sample and a vehicle as an impactor, said vehicle being fitted with instrumentation and nodes being provided at either end of the road barrier. The road barrier may be tested with an oblique collision with the vehicle.

In order to more easily provide a high velocity impact both the sample and impactor may be accelerated towards one another, preferably, by using prestressed cables.

Further according to the present invention there is provided a method of modifying a real scale Hopkinson bar system, said method comprising operatively connecting, by means of a node, a sample or structure under test to at least two (untied) output bars arranged perpendicularly to one another.

Preferably, there is a substantially frictionless connection between at least one of the output bars and the node.

Further according to the present invention there is provided a method of measuring the perpendicular components of a force in a sample or structure under test by a Hopkinson bar system or pressure bar system including strain gauges, by measuring forces in a Hopkinson bar operatively connected to and axially aligned with said sample or structure and by measuring forces in a Hopkinson bar operatively connected but arranged perpendicularly to the sample or structure.

Said method may include impacting the sample or structure with an obstacle or impactor up to a velocity of about 20 to 40 ms$^{-1}$. The impactor is, preferably, cylindrical. The impactor may be arranged to be deformable during the impact.

Advantageously, therefore, a real size sample can be tested and analysed under conditions of assymetrical loading or impact using an LDTF with a Hopkinson bar system in accordance with the present invention.

Further according to the present invention there is provided a Hopkinson bar system or pressure bar system comprising a plurality of output bars arranged, in use, to measure components of an impulsive force along whatever selected direction in a sample or structure being tested, avoiding measurement inaccuracies due to stress wave reflections and inertia effects.

Preferably, the output bars are, in use, coupled with a sample or structure being tested, without geometric modifications being made to the structure which could disturb distribution of impulsive forces to be measured.

Many advantageous features of the system or method will be apparent from the following description and drawings.

Embodiments of a Hopkinson bar system or pressure bar system in accordance with the present invention will now be described, by way of example only, with reference to the accompanying, much simplified schematic drawings in which:

FIGURE 1 shows the general layout of a known three point bending large dynamic testing facility (LDTF) Hopkinson bar system;

FIGURE 2 shows details of a modification to the Hopkinson bar system shown in FIGURE 1, said modification being in accordance with a first embodiment of the present invention;

FIGURE 3a shows a sectional view through a node taken on the line III-III of FIGURE 2, and

FIGURE 3b shows a perspective view of the node drawn to a different scale;

FIGURE 4 shows a scheme in accordance with a second embodiment of the present invention for investigating a non-central normal loading of a linear structure;

FIGURE 5 shows a scheme for investigating an oblique collision of a deformable safety construction with a rigid wall, in accordance with the a third embodiment of present invention;

FIGURE 6 shows a real-size experiment with a road barrier and a vehicle, in accordance with a fourth embodiment of the present invention, and

FIGURE 7 shows a scheme with movement of a driver and a sample in accordance with a fifth embodiment of the present invention.

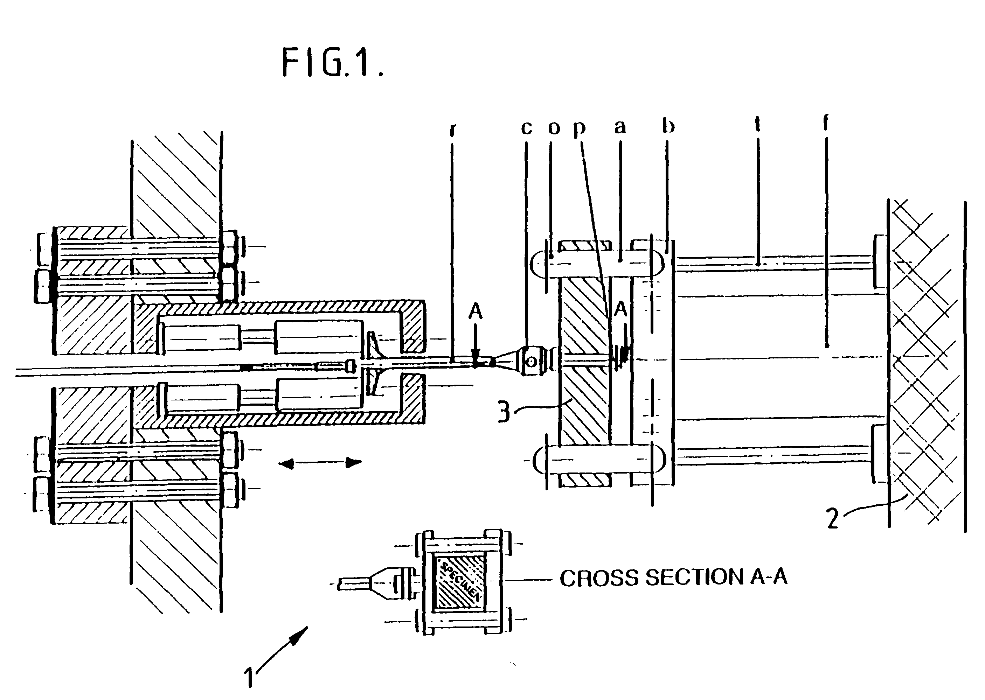

FIGURE 1 of the drawings shows a three-point bending Hopkinson bar or pressure bar system which is basically known for the investigation of forces in reinforced concrete beams. Such equipment has been used in quasi-static conditions, without considering wave effects.

FIGURE 1 shows an LDTF 1 comprising a support beam b fixed to a containing frame f. To increase flexible rigidity, beam b is anchored at each end to the apparatus foundation 2 by stiffening rods t. A sample or structure 3 under investigation is loaded by two rollers o which are connected to a support beam b through arms a and the attachment plate p, thus making up a three-point loading configuration. Impulse loading is applied through attachment plate p via the cleave c and the transmission rod r more particularly as explained in the aforementioned paper "Nuclear Engineering and Design 112 (1989) page 65".

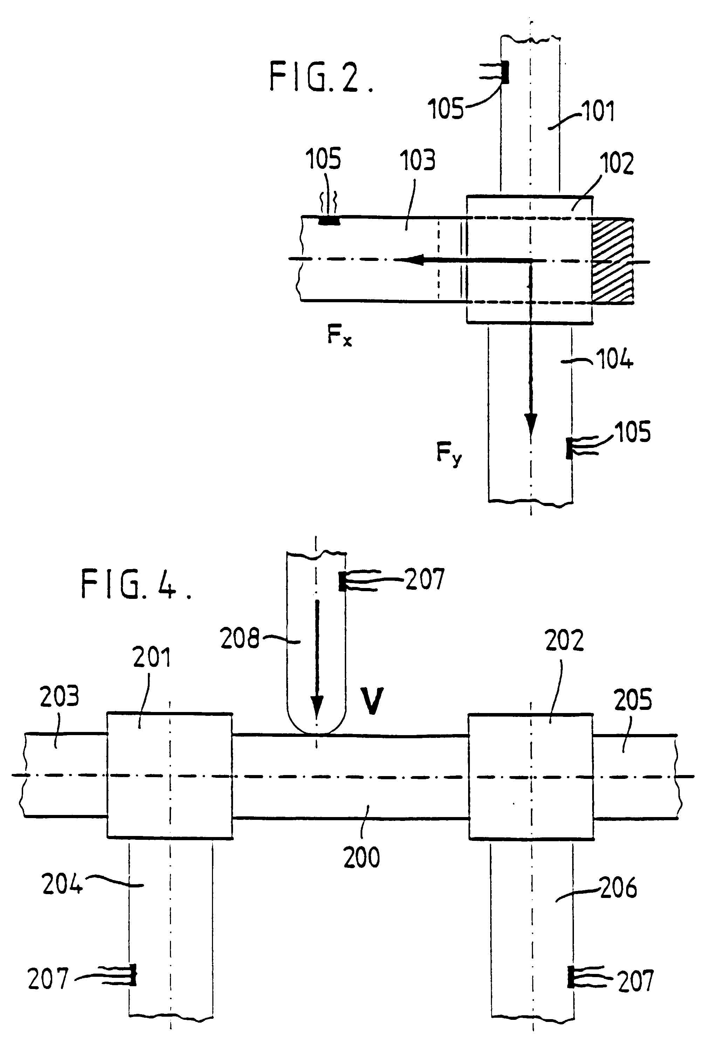

The present invention is concerned with modifying, for example, the apparatus 1 as shown in FIGURE 1, by the introduction of additional output bars arranged to measure perpendicular components of a force in a sample or structure under investigation and this may be done using the scheme as outlined in FIGURE 2.

FIGURE 2 illustrates how the Hopkinson bar system e.g. as outlined in FIGURE 1 can be modified for measurement of components of a force at a controlled point.

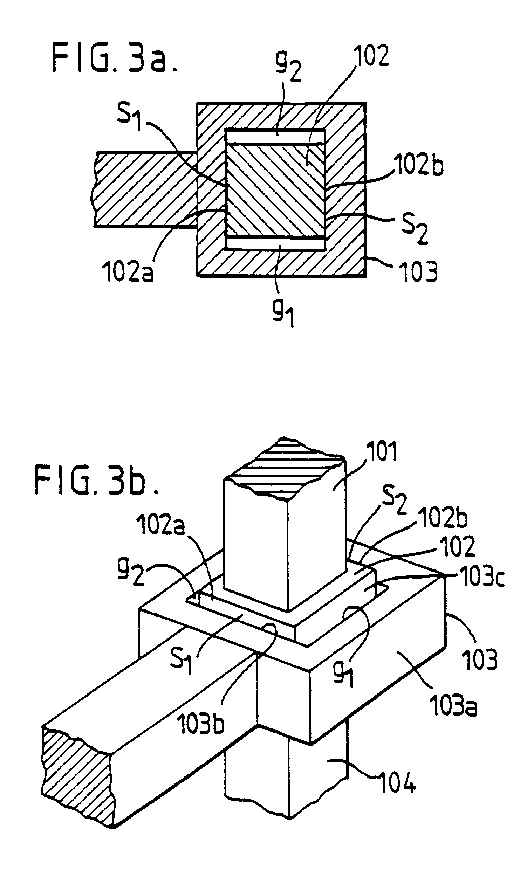

FIGURE 2 shows part of a structure or sample 101 under investigation which is attached, for example, by gluing, welding or by a force-fit to a transient part or node 102 having a generally square cross-section (see FIGURES 3a and 3b) somewhat larger than the cross sections of the output bars 103, 104 for measuring perpendicular force components in the X and Y directions. Strain gauges 105 are positioned on the output bars 103 and 104 as well as on the structure part 101 under investigation. Structure part 101 may be under a generally axial load, in use, and may e.g. be part of a vehicle bumper acted upon by an impact bar (not shown). FIGURE 3a shows a cross section through the node 102 which should be generally self-explanatory when viewed in conjunction with the perspective view 3b . It will be seen that the output bar 103 has a square section hollow ring collar 103a defining gaps $g_1$ and $g_2$ on either

side of the node 102 permitting a small displacement of the node 102 relative to the output bar 103 in a plane perpendicular to output bar 104.

Low friction contact surfaces $s_1$ and $s_2$ are provided on opposite faces 102a,102b of the node 102, which surfaces contact associated inner side walls 103b,103c of ring collar 103a.

The strain gauges 105 should be provided on sufficiently long output bars 103,104 and should receive values of stresses in given direction according to the formula:-

$$\sigma_S = E \left[ \frac{A}{A_S} \right] \epsilon_T$$

where E is the modulus of elasticity of pressure bars and $\frac{A}{A_S}$ is the area ratio between the pressure bars and sample under test, $\epsilon_T$ is the transmitted pulse and $\sigma_s$ is the average stress in the sample (see pages 320 and 321 of Lindholm U.S. 1971, High Strain Rate Tests, Techniques of Metal Research, Volume 5, part 1, J Wiley, previously referred to).

In order to consider wave effects, rather long output bars are used to provide a desired time duration before wave reflection from the remote end, and accordingly the value of controlled deformation.

Thus, the arrangement shown in FIGURES 2,3a,3b allows the stress distribution in a Hopkinson bar system to be measured with independent measurement of all components of forces at control points in a sample under test, unlike in the Nuclear Engineering and Design, 112 (1989) paper previously referred to.

Even in the case of symmetrical loading of a complex structure, a loss of stability in some element can cause an intense local deformation followed by a drastic redistribution of forces. The arrangement shown in FIGURES 2,3a,3b can be used to measure perpendicular components of forces at controlled points of a structure using the two Hopkinson output bars 104,105.

Where, for example, complex three dimensional structures are under test, three Hopkinson output bars may be used. These could be employed mutually at right angles, e.g. at the same node. Each bar 104,105 does not impede the perpendicular displacements of the controlled node 102 and in practice does not influence measurements of other force components if virtually negligible friction is provided between the node 102 and contact surfaces (side walls 103b,103c).

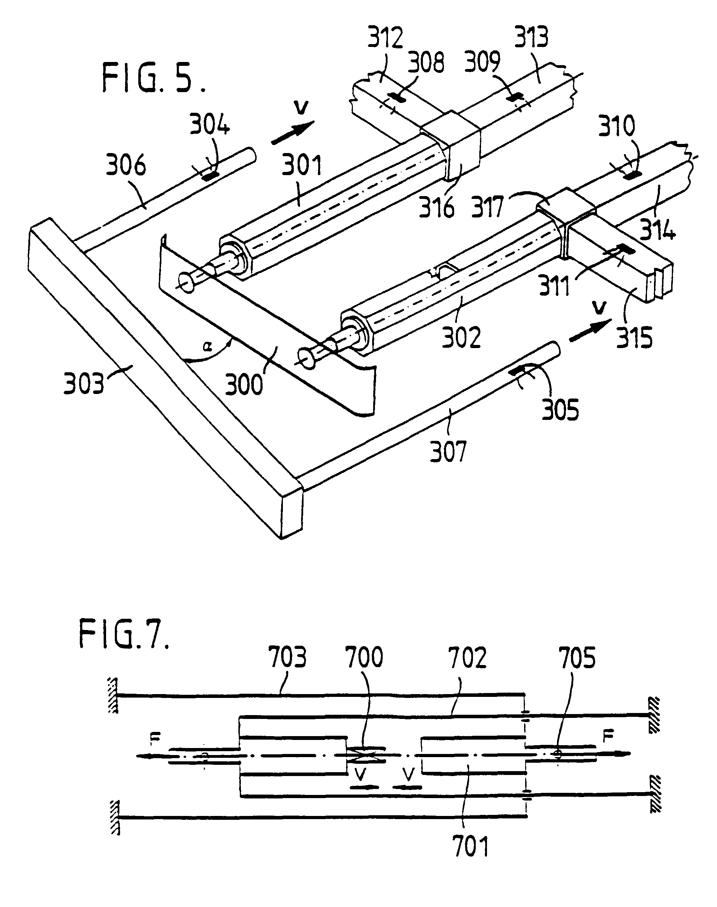

The arrangement shown in FIGURE 2 may be modified to investigate with precise measurements an extensive programme of crash impact phenomena at levels of a different complexity. A first characteristic scheme is shown in FIGURE 4.

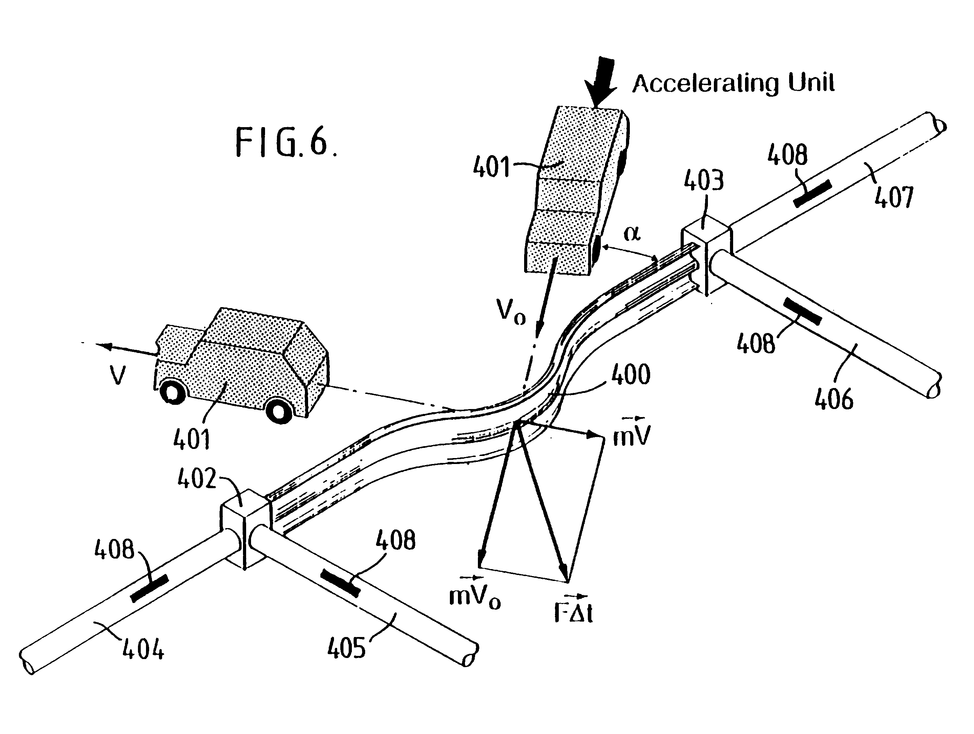

Further characteristic schemes are shown in FIGURES 5 and 6.

The primary, basic level of investigation includes testing of linear structures (for example, a rod, a profile, a tube, a part of a real road barrier with poles or a real bumper) in cases of symmetrical axial impact loading (a typical 3-point bending). FIGURE 4 shows a scheme in which the effect of a non-central normal impact is investigated.

FIGURE 4 shows a sample or structure 200 under test which is connected at either end to a node 201,202, said nodes being connected in turn to associated Hopkinson output bars 203,204,205,206 in the manner shown schematically. Thus, output bar 203 is at right angles to output bar 204 and output bar 205 is at right angles to output bar 206. Once again, the nodes 201,202 may be connected to the sample 200 by welding or otherwise and low or negligible friction should be provided between each node 201,202 and respective contact surfaces of the output bars 203,204,205 and 206. Each node 201,202 and connection with associated output bars 203,204,205,206 may be of the detailed form shown in FIGURE 3b with, for example, the output bar 204 or 206 replacing output bar 105. Strain gauges 207 are provided on the output bars 203,204,205,206 (FIGURE 4 shows strain gauges on output bars 203,205) and also on an incident or impact bar 208 (a driver) which, in use, provides a non-central normal impact on the sample 200 under test.

FIGURE 5 illustrates a scheme for investigation of an oblique collision of a deformable vehicle safety construction in the form of a real size car bumper 300 with supporting deformable constructions or elements 301,302 with a rigid wall 303. The arrangement shown in FIGURE 5 represents a second level of complexity corresponding to investigations of the mechanical characteristics of 2 or 3 dimensional model structures representing the energy absorbing parts of vehicles of which the real bumper 300 and supporting constructions 301,302 are an example. It is envisaged that an oblique collision (bumper 300 is arranged at the angle a to the rigid wall 303 - forming part of a Hopkinson bar arrangement) will take place in conditions of high velocity impact and other typical rigid obstacles for example, a wall or a column, could be investigated. FIGURE 5 shows strain gauges 304,305 attached to instrumented impact Hopkinson bars or rods 306,307 connected in parallel relationship at either end of the rigid wall 303. Additional strain gauges 308,309,310,311 are provided on associated Hopkinson output bars 312,313,314 and 315 connected at nodes 316 and 317 in a similar manner to that previously described.

A further or third level of complexity is illustrated in FIGURE 6 which depicts a real size experiment with a road barrier 400 and a vehicle 401. FIGURE 6 illustrates a real case scenario of mutual simultaneous deformation of the vehicle 401 and the obstacle 400 in a high velocity impact. It is possible to measure mechanical characteristics in the case of the oblique collision of the car 401 with real road barrier 400 with different variants of cars and different angles of impact with particular designs of barrier. Thus the vehicle 401 may be equipped with instrumentation and driven at the road barrier 400 (sample under the test) at a velocity $V_o$ with the vehicle bouncing off the deformed barrier 400 at the velocity V as shown in FIGURE 6. Nodes 402 and 403 are provided at either end of the road barrier 400, for example in the manner as previously described, said nodes 402,403 being connected to Hopkinson output bars 404,405,406,407 equipped with strain gauges 408 from which it is possible to estimate a mean force from impulse conservation law as shown diagrammatically on the FIGURE.

FIGURE 7 illustrates a further possible scheme so that a level of impact velocity higher than 20 metres per second can be provided for heavy constructions under investigation. The scheme illustrated in FIGURE 7 includes a sample or structure 700 under investigation and an impactor 701 (moving obstacle with attached output bar). Two prestressed cables 702,703 are utilised to accelerate both the sample 700 and impactor 701 towards one another (when released or fired towards one another) rather than accelerating only the impactor towards a sample as in previous arrangements. Numeral 705 represents an explosive bolt. The acceleration of both the impactor 701 and sample 700 requires essentially less energy. With colliding bodies of equal mass the total kinetic energy of the two bodies at the same relative velocity may be double that of one accelerated body. The excess of energy in the case of one accelerated body is sent to the movement of the centre of masses. The second advantage of the encounter movement of a sample and an obstacle resides in a more compact and reliable installation being feasible, which installation requires no special attachment to stop the system after collision.

Thus, embodiments of the present invention provide facility in a 1:1 scale experiment on a complex structure (for example real vehicle part or barrier) for detail information of distribution of forces and displacements during the process of a crash impact with velocities up to about 20 to 40 metres per second. Such information is required for developing effective safety systems for different vehicles and road barriers.

Measurement inaccuracies due to stress waves reflections (such as occur in French Patent Specification No. 2696002) may be alleviated in the present invention by any of the following:-

(1) proportioning the bar length to the test pulse duration; i.e. long pulse duration = long bars or installation at the bar end of a stress wave trap (stress wave absorber);

(2) proportioning the bar diameter (thickness) to the bar length in a way that non-axial elastic stress waves can propagate in the bars without disturbances from lateral oscillations of the bars;

(3) matching as near as possible the mechanical impedance pAC of the test sample and of the bars; p is density, A cross section and C elastic stress wave speed.

It is to be understood that the scope of the present invention is not to be unduly limited by the particular choice of terminology and that a specific term may be replaced or supplemented by any equivalent or generic term. Further it is to be understood that individual features, method, theory or functions related to the Hopkinson bar system or parts thereof, alone or in combination might be individually patentably inventive. The singular may include the plural or vice versa. In particular, any disclosure in this specification of a range for a variable or parameter shall be taken to include a disclosure of any selectable or derivable subrange within that range and shall be taken to include a disclosure of any value for the variable or parameter found within or at an end of the range.

## Claims

1. A Hopkinson bar system or pressure bar system (1) comprising a plurality of output bars (203,204,205,206) arranged or adapted, in use, to measure components of an impulsive force in a sample or structure (200) being tested.

2. A system (1) as claimed in Claim 1 in which the output bars (203,204,205,206) are arranged, in use, at an angle to one another.

3. A Hopkinson bar system or pressure bar system (1) comprising at least two output bars (103,104) operatively connected at an angle to one another, usually at right angles, by means of a node (102), said node (102), in use, being operatively connected to a sample or structure (101) being tested.

4. A system (1) as claimed in Claim 3 dimensioned to test a sample in the form of a bar of about 2 or 3 metre long.

5. A system (1) as claimed in Claim 4 in which the sample (101) is connected, in use, to one face of the node (102).

6. A system (1) as claimed in any one of Claims 3 to 5 in which the cross section of the node (102) is larger than that of the sample (101).

7. A system (1) as claimed in any one of Claims 3 to 6 in which one of the output bars (103) comprises a collar (103a) embracing the node (102) and there are gaps ($g_1,g_2$) defined between the node (102) and the collar (103a) on opposed sides thereof permitting a small displacement of the node (102) in a plane perpendicular to the output bar (104, which bar (104) is axially aligned with the sample (101) and attached to an opposing face of the node.

8. A system (1) as claimed in any one of Claims 3 to 7 having low friction contact surfaces ($s_1$, $s_2$, 102a, 102b) provided on contacting surfaces on at least one of the output bars (103,104) and node (101).

9. A system (1) as claimed in any one of Claims 3 to 8 in which the sample (200) is a linear structure and in a three-point bending arrangement, under a non-central normal impact loading; a node (201,202), is provided at each end of the linear structure (200) with each node (201,202) connected to two mutually perpendicular output bars (203,204; 205,206), two of said output bars (203,205) being parallel or axially aligned with the linear structure and said other two output bars (204,206) being parallel to one another.

10. A system (1) as claimed in any one of Claims 3 to 8 in which the sample (300,301,302) is a real part of a vehicle, e.g. vehicle bumper (300), with supporting constructions (301,302) undergoing an oblique collision with a wall (303), forming one of said output bars (103,104), under high velocity impact of about 20 to 40 ms$^{-1}$.

11. A system (1) as claimed in any one of Claims 3 to 8 in which a road barrier (400) is the sample and a vehicle (401) is provided as an impactor, said vehicle (401) being fitted with instrumentation and nodes (402,403) being provided at either end of the road barrier (400).

12. A system (1) as claimed in any one of Claims 3 to 11 in which a range velocity impact is provided by the sample (700) and a, or the, impactor (701) being accelerated towards one another by using prestressed cables (702,703).

13. A system (1) as claimed in any one of the preceding claims including three output bars mutually at right angles.

14. A Hopkinson bar system or pressure bar system comprising a plurality of output bars (203,204,205,206) arranged, in use, to measure components of an impulsive force along whatever selected direction in a sample or structure (200) being tested, avoiding measurement inaccuracies due to stress wave reflections and inertia effects.

15. A system (1) as claimed in any one of the preceding claims in which the output bars are, in use, coupled with a sample or structure being tested, without geometric modifications being made to the structure which could disturb distribution of impulsive forces to be measured.

16. A method of modifying a rear scale Hopkinson bar system (1), said method comprising operatively connecting, by means of a node (102), a sample or structure (101) under test to at least two, untied, output bars (103,104) arranged perpendicularly to one another and in which there is a substantially frictionless connection between at least one of the output bars (103,104) and the node.

17. A method of measuring the perpendicular components of a force in a sample or structure (101) under test by a Hopkinson bar system (1) or pressure bar system including strain gauges (105), by measuring forces in a Hopkinson bar (104) operatively connected to and axially aligned with said sample or structure (101) and by measuring forces in a Hopkinson bar operatively connected but arranged perpendicularly to the sample or structure (101), said method including impacting the sample or structure with an obstacle or impactor, cylindrical and deformable, up to a velocity of about 20 to 40 ms$^{-1}$.

## Patentansprüche

1. Hopkinson-Stabsystem oder Druckstabsystem (1), umfassend mehrere Ausgangsstäbe (203, 204, 205, 206), welche in Gebrauch zum Messen von Komponenten einer impulsartigen Kraft in einer zu untersuchenden Probe oder Struktur (200) angeordnet oder angepaßt sind.

2. System (1) nach Anspruch 1, dadurch gekennzeichnet, daß die Ausgangsstäbe (203, 204, 205, 206) in Gebrauch unter einem Winkel zueinander angeordnet sind.

3. Hopkinson-Stabsystem oder Druckstabsystem (1), umfassend wenigstens zwei Ausgangsstäbe (103, 104), welche im Betrieb mittels eines Knotenpunktes (102) unter einem Winkel, normalerweise unter rechten Winkeln, miteinander verbunden sind, wobei der Knotenpunkt (102) in Gebrauch mit einer zu untersuchenden Probe oder Struktur (101) betriebsmäßig verbunden ist.

4. System (1) nach Anspruch 3, dadurch gekennzeichnet, daß es derart dimensioniert ist, daß eine Probe in Form eines Stabes mit einer Länge von etwa 2 oder 3 Metern geprüft werden kann.

5. System (1) nach Anspruch 4, dadurch gekennzeichnet, daß die Probe (101) in Gebrauch mit einer Seite des Knotenpunktes (102) verbunden ist.

6. System (1) nach einem der Ansprüche 3 bis 5, dadurch gekennzeichnet, daß der Querschnitt des Knotenpunktes (102) größer als derjenige der Probe (101) ist.

7. System (1) nach einem der Ansprüche 3 bis 6, dadurch gekennzeichnet, daß einer der Ausgangsstäbe (103) eine den Knotenpunkt (102) umgreifende Manschette (103a) aufweist und daß zwischen dem Knotenpunkt (102) und der Manschette (103a) festgelegte Spalte ($g_1$, $g_2$) an deren gegenüberliegenden Seiten ausgebildet sind, welche ein geringfügiges Verschieben des Knotenpunktes (102) in einer Ebene senkrecht zum Ausgangsstab (104) gestatten, welcher Stab (104) axial mit der Probe (101) fluchtet und an einer gegenüberliegenden Seite des Knotenpunktes befestigt ist.

8. System (1) nach einem der Ansprüche 3 bis 7, dadurch gekennzeichnet, daß Kontaktflächen ($s_1$, $s_2$, 102a, 102b) mit geringer Reibung an Kontaktflächen wenigstens eines der Ausgangsstäbe (103, 104) und des Knotenpunktes (101) vorgesehen sind.

9. System (1) nach einem der Ansprüche 3 bis 8, dadurch gekennzeichnet, daß die Probe (200) eine lineare Struktur ist und sich unter einer außermittigen, senkrechten Stoßbelastung in einer Dreipunkt-Biegeanordnung befindet; daß ein Knotenpunkt (201, 202) an jedem Ende der linearen Struktur (200) vorgesehen ist, wobei jeder Knotenpunkt (201, 202) mit zwei zueinander senkrechten Ausgangsstäben (203, 204; 205, 206) verbunden ist und zwei dieser Ausgangsstäbe (203, 205) parallel zu der linearen Struktur oder axial zu dieser ausgerichtet sind und die anderen zwei Ausgangsstäbe (204, 206) parallel zueinander angeordnet sind.

10. System (1) nach einem der Ansprüche 3 bis 8, dadurch gekennzeichnet, daß die Probe (300, 301, 302) ein tatsächliches Teil eines Fahrzeuges, beispielsweise eine Fahrzeugstoßstange (300), mit Haltekonstruktionen (301, 302) ist, das einem schrägen Zusammenprall mit einer Wand (303), die einen der Ausgangsstäbe (103, 104) bildet, unter einem Hochgeschwindigkeitsstoß von etwa 20 bis 40 ms$^{-1}$ unterzogen wird.

11. System (1) nach einem der Ansprüche 3 bis 8, dadurch gekennzeichnet, daß die Probe eine Straßensperre (400) und ein Fahrzeug (401) als Stoßgeber vorgesehen ist, wobei das Fahrzeug (401) mit einer Instrumentierung ausgestattet ist und Knotenpunkte (402, 403) an jedem Ende der Straßensperre (400) vorgesehen sind.

12. System (1) nach einem der Ansprüche 3 bis 11, dadurch gekennzeichnet, daß ein Bereich für die Zusammenprallgeschwindigkeit vorgesehen ist, in dem die Probe (700) und ein oder der Stoßgeber (701) unter Verwendung vorgespannter Seile (702, 703) gegeneinander beschleunigt werden.

13. System (1) nach einem der vorhergehenden Ansprüche, dadurch gekennzeichnet, daß drei Ausgabestäbe gegenseitig rechte Winkel einschließen.

14. Hopkinson-Stabsystem oder Druckstabsystem, umfassend mehrere Ausgangsstäbe (203, 204, 205, 206), welche in Gebrauch zum Messen von Komponenten einer impulsartigen Kraft entlang jedweder ausgewählten Richtung in einer zu untersuchenden Probe oder Struktur (200) angeordnet sind, wobei Meßungenauigkeiten aufgrund von Stoßwellenreflexionen und Trägheitseffekten verhindert sind.

15. System (1) nach einem der vorhergehenden Ansprüche, dadurch gekennzeichnet, daß die Ausgangsstäbe in Gebrauch mit einer zu untersuchenden Probe oder Struktur gekoppelt sind, ohne daß geometrische Änderungen an der Struktur vorgenommen worden sind, welche die Verteilung der zu messenden, impulsartigen Kräfte stören könnte.

16. Verfahren zum Abändern eines Hopkinson-Stabsystems (1) im Echtmaßstab, wobei das Verfahren mittels eines Knotenpunktes (102) ein betriebsmäßiges Verbinden einer zu prüfenden Probe oder Struktur (101) mit wenigstens zwei gelösten Ausgangsstäben (103, 104), welche senkrecht zueinander angeordnet sind, umfaßt und bei welchen eine im wesentlichen reibungslose Verbindung zwischen wenigstens einem der Ausgangsstäbe (103, 104) und dem Knotenpunkt vorgesehen wird.

17. Verfahren zum Messen der senkrechten Komponenten einer Kraft in einer zu untersuchenden Probe oder Struktur (101) mittels eines Hopkinson-Stabsystems (1) oder eines Dehnungsmeßstreifen (105) aufweisenden Druckstabsystems durch Messen der Kräfte in einem Hopkinson-Stab (104), welcher betriebsmäßig mit der Probe oder Struktur (101) verbunden und axial zu dieser ausgerichtet ist, und durch Messen der Kräfte in einem Hopkinson-Stab, welcher betriebsmäßig mit der Probe oder Struktur (101) verbunden, jedoch senkrecht zu dieser angeordnet ist, wobei das Verfahren einen Zusammenprall der Probe oder Struktur mit einem zylindrischen und deformierbaren Hindernis oder Impulsgeber bis zu einer Geschwindigkeit von etwa 20 bis 40 ms$^{-1}$ umfaßt.

**Revendications**

1. Système de barres de Hopkinson ou système de barres de pression (1), comprenant une pluralité de barres de sortie (203, 204, 205, 206) agencées ou conçues, en fonctionnement, pour mesurer les composantes d'une force impulsive dans un échantillon ou une structure (200) faisant l'objet d'un test.

2. Système (1) selon la revendication 1, dans lequel les barres de sortie (203, 204, 205, 206) sont agencées, en fonctionnement, selon un angle l'une par rapport à l'autre.

3. Système de barres de Hopkinson ou système de barres de pression (1), comprenant au moins deux barres de sortie (103, 104) raccordées, en fonctionnement, selon un angle l'une par rapport à l'autre, habituellement selon des angles droits, au moyen d'un noeud (102), le dit noeud (102) étant raccordé, en fonctionnement, à un échantillon ou une structure (101) faisant l'objet d'un test.

4. Système (1) selon la revendication 3, dimensionné pour tester un échantillon se présentant sous la forme d'une barre ayant une longueur de 2 ou 3 mètres environ.

5. Système (1) selon la revendication 4, dans lequel l'échantillon (101) est raccordé, en fonctionnement, à une face du noeud (102).

6. Système (1) selon l'une quelconque des revendications 3 à 5, dans lequel la section droite du noeud (102) est plus grande que celle de l'échantillon (101).

7. Système (1) selon l'une quelconque des revendications 3 à 6, dans lequel l'une des barres de sortie (103) comprend un collier (103a) embrassant le noeud (102) et où sont présents des espaces ($g_1$, $g_2$) définis entre le noeud (102) et le collier (103a) sur ses côtés opposés, permettant un petit déplacement du noeud (102) dans un plan perpendiculaire à la barre de sortie (104), laquelle barre (104) est axialement alignée avec l'échantillon (101) et est assujettie à une face opposée du noeud.

8. Système (1) selon l'une quelconque des revendications 3 à 7, comportant des surfaces de contact à faible frottement ($s_1$, $s_2$, 102a, 102b) ménagées sur des surfaces de contact présentes sur au moins l'une des barres de sortie (103, 104) et le noeud (101).

9. Système (1) selon l'une quelconque des revendications 3 à 8, dans lequel l'échantillon (200) est une structure linéaire et selon un agencement de flexion à trois points, sous une force de choc normale non centrale ; un noeud (201, 202) est prévu à chaque extrémité de cette structure linéaire (200), chaque noeud (201, 202) étant raccordé à deux barres de sortie mutuellement perpendiculaires (203, 204 ; 205, 206), deux des dites barres de sortie (203, 205) étant parallèles à ou axialement alignées avec la structure linéaire et les dites deux autres barres de sortie (204, 206) étant parallèles l'une à l'autre.

10. Système (1) selon l'une quelconque des revendications 3 à 8, dans lequel l'échantillon (300, 301, 302) est une partie réelle d'un véhicule, par exemple un pare-chocs de véhicule (300), présentant des structures de support (301, 302) soumises à une collision oblique avec un mur (303), formant l'une des dites barres de sortie (103, 104), sous un choc à vitesse élevée d'environ 20 à 40 ms⁻¹.

11. Système (1) selon l'une quelconque des revendications 3 à 8, dans lequel une barrière routière (400) est l'échantillon et un véhicule (401) est prévu comme s'agissant d'un projectile de choc, le dit véhicule (401) étant pourvu d'instruments et des noeuds (402, 403) étant prévus à chacune des deux extrémités de la barrière routière (400).

12. Système (1) selon l'une quelconque des revendications 3 à 11, dans lequel un choc à vitesse élevée est réalisé par l'échantillon (700) et un ou le projectile de choc (701) soumis à une accélération qui les rapproche l'un de l'autre en utilisant des câbles précontraints (702, 703).

13. Système (1) selon l'une quelconque des revendications précédentes, incluant trois barres de sortie mutuellement agencées à angles droits.

14. Système de barres de Hopkinson ou système de barres de pression, comprenant une pluralité de barres de sortie (203, 204, 205, 206) agencées, en fonctionnement, pour mesurer les composantes d'une force impulsive suivant une quelconque direction dans un échantillon ou une structure (200) faisant l'objet d'un test, en évitant les imprécisions de mesure consécutives aux effets de réflexions d'ondes de contraintes et d'inertie.

15. Système (1) selon l'une quelconque des revendications précédentes, dans lequel les barres de sortie sont couplées, en fonctionnement, à un échantillon ou une structure faisant l'objet d'un test, sans modification géométrique apportée à cette structure, qui perturberait la distribution des forces impulsives devant être mesurées.

16. Procédé de modification d'un système de barres de Hopkinson à l'échelle réelle (1), le dit procédé comprenant le raccordement, en fonctionnement, et au moyen d'un noeud (102), d'un échantillon ou d'une structure (101) faisant l'objet d'un test à au moins deux barres de sortie (103, 104) non couplées et agencées perpendiculairement l'une à l'autre, et dans lequel est établi un raccordement sensiblement sans frottement entre au moins l'une des barres de sortie (103, 104) et le noeud.

17. Procédé de mesure des composantes perpendiculaires d'un force dans un échantillon ou une structure (101) faisant l'objet d'un test au moyen d'un système de barres de Hopkinson (1) ou d'un système de barres de pression incluant des jauges de contraintes (105), en mesurant les forces dans une barre de Hopkinson (104) raccordée à et axialement alignée avec, en fonctionnement, le dit échantillon ou la dite structure (101), et en mesurant les forces dans une barre de Hopkinson raccordée, en fonctionnement, mais agencée perpendiculairement à l'échantillon ou la structure (101), le dit procédé incluant la collision de l'échantillon ou de la structure avec un obstacle ou un projectile de choc cylindrique et déformable, à une vitesse atteignant environ 20 à 40 ms⁻¹.

FIG.1.

CROSS SECTION A-A

FIG.2.

105
101
105 103 102
104
$F_x$
$F_y$

FIG.4.

207
208
201 202
203 205
200
204 206
207 207

V

FIG. 3a.

$g_2$  102

$S_1$

102b

$S_2$

102a

103

$g_1$

FIG. 3b.

101

102a

$S_2$  102b

$g_2$

102

103c

$S_1$

$g_1$

103

103b

103a

104

FIG. 5.

FIG.7.

FIG.6.